# EUROPEAN PATENT APPLICATION

(11) **EP 4 800 629 A1**
(43) Date of publication of application: **02.09.2026**
(21) Application number: 24880824.8
(22) Date of filing: 24.10.2024
(51) Int. Cl.: G06Q 30/02

(54) **INTERACTIVE AUDIO MEDIA SYSTEM FOR ADVERTISING IN PRODUCT DISPLAYS WITH COMPUTER VISION CAMERA**

(30) Priority: 26.10.2023 BR 102023022399
(71) Applicant: De Almeida Ferraz, Danilo, 09861-140 São Bernardo do Campo (BR)
(72) Inventor: De Almeida Ferraz, Danilo, 09861-140 São Bernardo do Campo (BR)
(74) Representative: ZBM Patents - Zea, Barlocci & Markvardsen
(86) International application number: PCT/BR2024/050486
(87) International publication number: WO 2025/085987

(57) **Abstract**

The present invention related to a system comprising computer vision cameras (1), trained to recognise objects and even people, and upon identifying them, can vocalise audio advertisements through vibrating speakers (5) with messages depending on the interactivity and programming of the controlling "player" (2) in product displays in shops and supermarkets.

## Description

The objective of the present invention is a system composed of an electronic and electromechanical device connected to computer vision cameras (1) with deep learning capabilities, which can be trained to recognize objects and/or people, installed on store displays or shelves. Upon recognizing the presence of a customer in front of the display and/or a product removed from the shelf by the customer, it plays audio or sound through vibration speakers (5) installed on the display, reverberating through the structure and the walls of the medium where it is fixed, thus generating sound in the form of advertising, information, and offers.

Shelves and store or supermarket gondolas are typically arranged with products for customer purchase. There are some shelves that have LED displays, price tags, labels, and signs to provide information about prices, promotions, and product details. The distinguishing feature of this patent is to provide customers with more options for advertisements and information through sound, and not just visually. The distinguishing feature compared to patent BR102018000339-9 is the increased interactivity power for the customer with the system, through the use of computer vision cameras (1), which can be trained to identify the interaction of people with products, determine which product the customer is interacting with, and even recognize individuals, such as whether they are adults and their gender, in order to send targeted messages or advertisements. All messages are delivered via voice when making advertisements, promotions, and offers, vocalized through vibration speakers (5). The system consists of a "Player" and/or controller (2), smart cameras (1) positioned on the display to recognize people and objects and to play sound near the customer through the speaker (5), managed by the controller (2), which transmits the sound to the speaker (5) closest to the customer in front of the product display, based on information obtained from the camera (1). Through the camera (1), the controller (2) can even determine which product the customer is interacting with, or recognize the customer, transforming what was previously visual communication into audible communication, with much more powerful interactivity enabled by the cameras (1), thus becoming a new interactive and intelligent form of communication in the advertising and announcement market for stores and supermarkets.

The sound/audio to be played uses, as described, vibration speakers (5), which have the advantage of being invisible to the user, where, through the player and controller (2), it is possible to generate the audio (5), with or without SD Card input (5), with amplifier (3), or integrated into a mini-computer, such as a PC, Arduino, Raspberry Pi, or others. It may also have voice input and loading performed wirelessly (9), such as via Bluetooth, Wi-Fi, or Wireless LAN, controlling a Mux (4) that selects which speaker (5) should play the sound, and may also have presence sensors (8) installed on the display.

Interactivity occurs when the camera (1) detects a human near the display, and can even identify whether it is a man or a woman, an adult or a child, and even who is near the display, as well as determine which product the customer is interacting with or purchasing. Based on the camera information (1), the control and player unit (2) can determine which audio (5) and, through the mux (4) controlled by (7), to which speaker (5) the audio should be delivered.

The voice message to be played, contained in the player or controller (2), can be "Standalone" or loaded via USB, or from a Wi-Fi network, LAN, Bluetooth (9), or another wireless network, and the sound to be played corresponds to the information obtained through the analysis performed by the camera (1), where the control unit (2), through the Mux (4), selects the speaker (5).

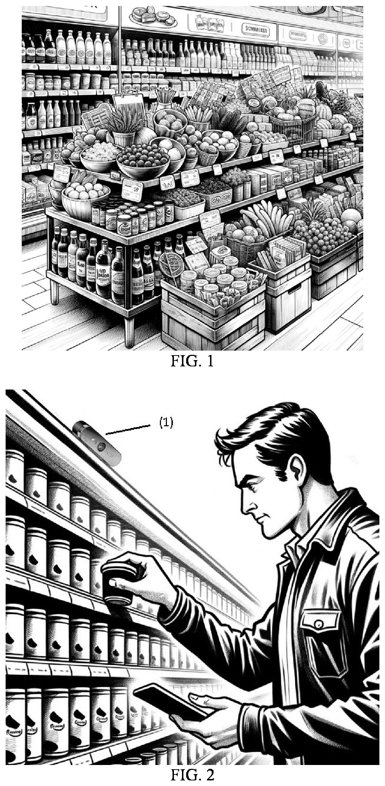

Figure 1 shows an example of a product display in a supermarket without the devices of the patent.

Figure 2 shows a supermarket display containing the computer vision camera (1), the fundamental object of the patent, which, upon observing the customer, can send information to the controller (2) so that it can vocalize messages through the loudspeaker (5).

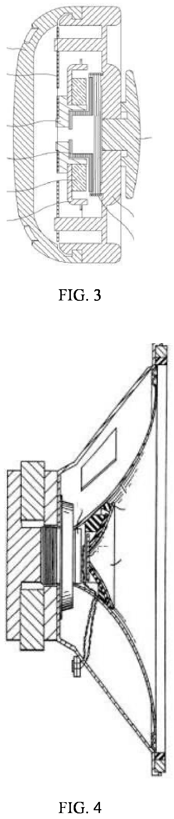

Figure 3 shows an example of a vibration speaker (5) previously described, as also described in patent US8213644. This type of vibration speaker is preferred, as it can be installed attached to the structure of the display, usually in an invisible manner, causing the sound to reverberate through the body where it is installed, and the sound is not affected if a product is placed in front of it.

Figure 4 shows a regular speaker which, unlike the vibration speaker (5), produces sound that can only be heard directly through the speaker.

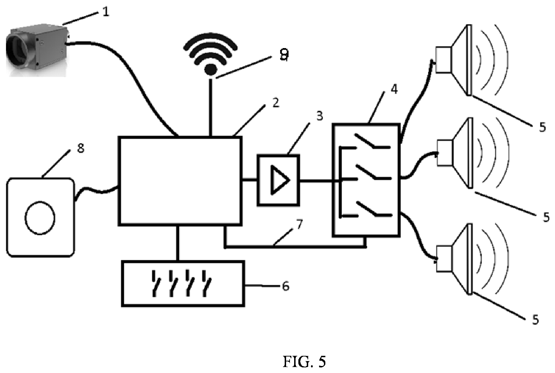

Figure 5 shows the block diagram of the system with the described functionality, containing the modules that are part of the invention for it to operate, showing the speaker interconnected with cameras (1) and connections with other interaction sensors, such as touch sensors or switches (6). It also includes an input for storage cards such as SD Card or USB, and a wireless connection (9) through which sounds can be programmed and loaded externally from a central unit, with the entire circuit powered by battery or externally.

And in accordance with what is illustrated by the figures referenced above, the "Interactive Audio Media System for Advertising on Product Displays with Computer Vision Camera," as presented, can be constructed in various other ways, with one or multiple cameras (1) and speakers (5), and can also be used for all types of displays with or without doors, freezers, shelves, horizontal and vertical, etc., and even integrated into an LCD screen, TV, video, or LED display, where the examples and figures cited and presented are for illustrative purposes only and are not limiting.

## Claims

1. It is characterized as an invention composed mainly of a set consisting of trained computer vision cameras (1) and vibration speakers (5), where the camera (1) is responsible for identifying objects and people and the interaction of customers with products near the display, and for vocalizing advertisements through one or several vibration speakers (5) installed on or not on the display body. Based on identification by the cameras (1) and sensors (8) and (6), the control and player unit (2) determines which speaker (5) should play the sound through the amplifier (3) and the Mux (4). This audio is obtained from the SD CARD memory or USB, and may also have wireless connectivity (9) so that audio and configuration signals for external communication with the controller (4) can occur. The control unit (2) is responsible for analyzing the sensors and switches (6) (8) and the information from the camera (1), thus generating the sound corresponding to the customer's interaction, and playing the sound only on the speaker (5) closest to the customer's location, through the Mux (4).
